# DEMANDE DE BREVET EUROPEEN

(11) **EP 0 854 539 A1**
(43) Date de publication de la demande: **22.07.1998**
(21) Numéro de dépôt: 98430001.2
(22) Date de dépôt: 05.01.1998
(51) Int. Cl.: H01R 4/36, H01R 13/629, F16B 31/02

(54) **Dispositif pour connexions électriques**

(30) Priorité: 09.01.1997 FR 9700316
(71) Demandeur: Baron, Denis Philippe, 13580 La Fare les Oliviers (FR)
(72) Inventeur: Baron, Denis Philippe, 13580 La Fare les Oliviers (FR)

(57) **Abrégé**

L'invention concerne un dispositif permettant d'améliorer les connexions électriques en évitant que l'écrasement des conducteurs électriques ou des vibrations ne desserrent ces conducteurs à connecter entre eux ou à un dispositif électrique.

Le dispositif comporte un ressort (6) mis en compression par l'écrou (3) lorsque la vis de serrage (2) est actionnée dans le sens du serrage. Une fois comprimé, le ressort (6) s'oppose à la rotation de la vis (2) par coincement des filets et maintient une pression constante sur les conducteurs électriques. Un voyant mécanique indique si le serrage est optimum lors du montage et lors des contrôles.

## Description

La présente invention concerne les connexions de conducteurs électriques entre eux ou à des dispositifs électriques.

La plupart des matériaux utilisés comme conducteurs électriques sont des métaux ductiles qui ont tendance à s'écraser sous la pression exercée par un connecteur lors d'un raccordement de conducteurs entre eux ou d'un ou de plusieurs conducteurs à un dispositif électrique. Au bout d'un certain temps le contact électrique réalisé par ce connecteur peut être moins bon et il faudrait resserrer ce connecteur pour être sûr d'avoir un bon contact électrique. Sur une installation électrique importante, ce phénomène implique une maintenance coûteuse.
D'autre part, des vibrations peuvent desserrer un connecteur et produire de mauvais contacts ou des coupures de contacts électriques occasionnant des pannes pouvant être importantes et coûteuses sur certaines installations alors que la cause n'en est souvent qu'une simple vis desserrée.
D'autre part, on peut difficilement faire le choix de la force de serrage exercée par un connecteur sur des conducteurs électriques; cette force peut être la cause de dommages causés à des conducteurs fragiles comme les multi-brins ou les fils très fins.

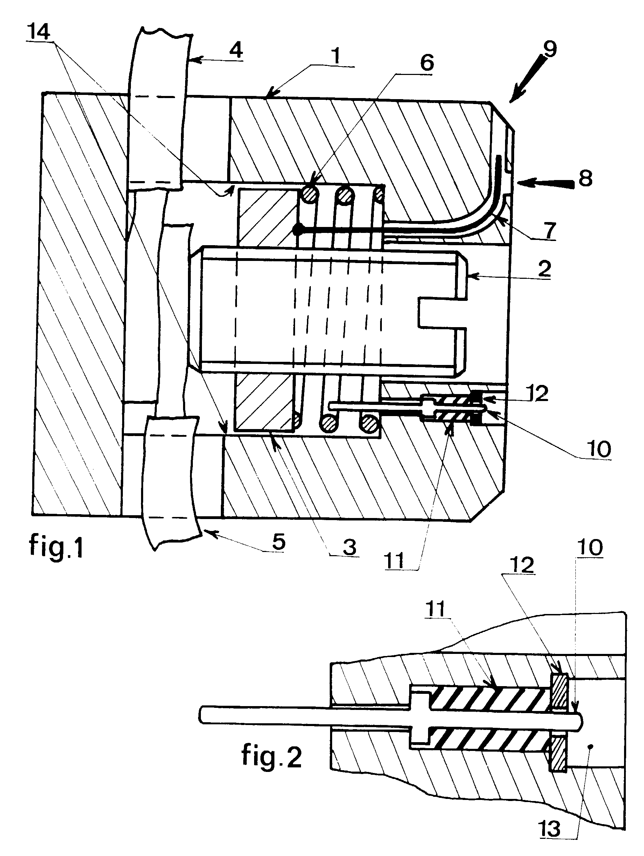

Le dispositif objet du brevet d'invention GB 433 330 A du 12 septembre 1935 pouvant présenter une similitude d'aspect avec l'invention objet de la présente demande, la comparaison ci-après a pour but de faire ressortir les différences entre ces deux dispositifs: tout d'abord, trois points essentiels sont exposés concernant le brevet cité , puis l'exposé portera, par comparaison, sur ces trois points concernant l'invention objet de la demande:
1) le but principal recherché dans l'amélioration des connecteurs est de les fabriquer en blocs fendus réalisables par extrusion et sécables en tronçons; dans cette idée, le corps du dispositif n'est décrit que comme étant métallique et ayant une forme particulière.
2) l'amélioration apportée par l'adjonction d'une rondelle-frein est de bloquer la vis de serrage en position serrée sur le corps du connecteur ( ligne 95 de la description) mais il n'est nulle part mentionné qu'il s'agisse de rattraper un desserrage éventuel des conducteurs; la figure 2 montre que le débattement du système de serrage est trop peu important pour jouer ce rôle de rattrapage de jeu, ce qui est confirmé par le texte du résumé, ligne 49: "l'écrou et la rondelle se déplacent sur une courte distance..." de toute façon une rondelle-frein ne peut pas assurer cette fonction de rattrapage de jeu.
3) il s'agit, comme il est écrit plusieurs fois dans la description et dans les revendications, de serrer un seul conducteur par élément de connexion.

Dans l'invention objet de la demande le but recherché est essentiellement de rattraper un desserrage éventuel des conducteurs d'où un résultat technique différent:
1) le corps du dispositif peut être métallique et isolé électriquement, il sera aussi réalisé en matériau isolant; sa forme, sa conception sont différentes de celles du dispositif du brevet cité ci-dessus.
2) le ressort principal employé, lorsqu'il réagit, a pour effet de coincer la vis de serrage au niveau de ses filets ce qui doit limiter son desserrage accidentel mais l'effet principal est de donner un grand débattement à tout le système de serrage pour rattraper un jeu éventuel même important dû à un desserrage de la vis mais aussi à un tassement, à des vibrations, à un chevauchement des conducteurs au montage, à une manipulation sans précaution... Ce débattement doit aussi être important pour permettre l'implantation et le bon fonctionnement du voyant mécanique qui vient en complément du dispositif de connexion.
3) le dispositif est destiné, par sa conception, à serrer un conducteur électrique ou plusieurs; il agit de manière similaire quel que soit le nombre des conducteurs ou leur diamètre;la force de serrage optimum des conducteurs obtenue lorsque le ressort est sollicité au maximum est identique quelle que soit l'épaisseur totale du/des conducteur(s) connecté(s).

Le dispositif selon l'invention est un dispositif de connexion permettant de remédier aux inconvénients cités plus haut et d'obtenir une force de serrage prédéterminée.

Il comporte en effet un corps composé d'une ou de plusieurs parties, indépendant ou faisant partie d'un ensemble électrique, au moins un moyen de serrage par vis et/ou écrou(s) du/des conducteur(s) électrique(s) à connecter entre eux ou à un dispositif électrique et, selon une première caractéristique, un ressort produisant une réaction croissante sur ledit/lesdits conducteur(s) électrique(s) lorsque le moyen de serrage est actionné dans le sens du serrage. Le ressort se situe entre l'écrou du moyen de serrage et le corps du dispositif, à l'opposé du/des conducteur(s) électrique(s) par rapport à l'écrou.

Dans toute la présente demande, lorsque le terme "ressort" est employé, il désigne un organe en matériau élastique pouvant supporter des déformations et destiné à réagir après avoir été comprimé ou tiré ou plié ou tordu; ce ressort peut être par exemple à lame ou à spirale ou en volute ou cylindrique ou en forme de U ou en forme de rondelle. D'autre part les termes "conducteurs électriques" englobent aussi les conducteurs de masse ou de terre.

Selon des modes particuliers de réalisation:
- le corps peut être essentiellement métallique isolé électriquement,
- le corps peut être essentiellement en matériau isolant électrique,
- le corps peut être totalement ou en partie transparent ou translucide,
- le dispositif peut comporter plusieurs ressorts agissant dans le même sens,
- le moyen de serrage peut être en contact direct avec le/les conducteur(s) électrique(s) à connecter ou il peut agir sur un/plusieurs organe(s) intermédiaire(s) interposé(s) entre ledit moyen de serrage et le/les conducteur(s) électrique(s),
- un voyant à fontionnement mécanique peut indiquer le niveau de la force de serrage.

Les dessins annexés illustrent l'invention dans des modes de réalisation nullement limitatifs:
La figure 1 représente, en coupe, le dispositif équipé de deux types de voyants, étant entendu qu'un seul voyant est suffisant et que le dispositif peut être réalisé sans voyant.
La figure 2 représente, en coupe, à une échelle plus importante, un voyant identique à celui représenté en figure 1 sous les mêmes références.

En référence à la figure 1, le dispositif comporte un corps 1 comportant une vis de serrage 2 pouvant tourner dans un écrou 3 prisonnier en rotation. Lorsque les conducteurs 4 et 5 à serrer sont en place dans le corps 1, en tournant la vis 2 dans le sens du serrage, elle entre en contact avec les conducteurs; en continuant de tourner la vis 2 dans le sens du serrage, l'écrou 3 est poussé par la vis 2 dans le sens opposé au déplacement de la vis, le ressort 6 oppose une force à ce déplacement; en continuant de tourner la vis dans le sens du serrage, l'écrou 3 pousse le ressort 6 qui se déforme jusqu'à sa position de déformation maximale, au fond de son logement. Le mouvement de la vis de serrage est alors pratiquement bloqué dans le sens du serrage et la pression exercée par la vis 2 sur les conducteurs est optimum; cette pression est prédéterminée par le type de ressort utilisé et la force nécessaire à le manoeuvrer. Un tassement des conducteurs, un chevauchement au montage, des vibrations, une manipulation sans précaution des conducteurs ou de conducteurs voisins ou toute autre raison de desserrage non voulu se traduirait dans un connecteur classique par un serrage défaillant des conducteurs alors que dans le présent dispositif le ressort 6 élimine, en se déformant, ce desserrage éventuel des conducteurs et a tendance à bloquer la vis de serrage par coincement des filets.Desserrer un connecteur tel que le dispositif objet de l'invention n'est pas plus difficile que desserrer un connecteur classique: il suffit de tourner la vis de serrage dans le sens du desserrage. Le dispositif selon la figure 1 est représenté de manière schématique; dans la pratique il peut comporter au moins une attache pour le fixer par exemple sur un bornier ou des moyens de fixation tels que trous,filetés ou non,pour loger vis ou goujons; un connecteur peut être composé de plusieurs dispositifs de connexion tels que celui de la figure 1 assemblés mécaniquement et/ou électriquement. Le dispositif peut aussi être intégré dans un dispositif électrique et servir au raccordement de celui-ci.

Dans une forme de réalisation selon la figure 1, le dispositif comporte un voyant à fonctionnement mécanique qui indique par son aspect et/ou sa position si le serrage des conducteurs électriques est optimum. Par exemple, le voyant peut être une languette de couleur bien visible par rapport à la couleur du corps du dispositif 1, liée à l'écrou 3, passant à travers le corps 1 par un trou débouchant à l'extérieur de ce corps en une zone 9 du dispositif facilement visible lorsque ledit dispositif est installé en position de fonctionnement. La languette 7 peut aussi être visible à travers une ouverture dans le corps 1 telle que celle située en 8 devant laquelle elle peut se déplacer. Lorsque l'écrou 3 comprime complètement le ressort 6, ladite languette est dans une position qui permet d'un simple regard de contrôler que le serrage est optimum lors du montage du dispositif et lors des visites de maintenance éventuelles; ce contrôle visuel est très rapide aussi bien pour un seul dispositif que pour un ensemble de dispositifs formant par exemple un bornier de connexion. En cas de tassement ou de toute cause pouvant amener un desserrage des conducteurs, le moyen de serrage maintient les conducteurs dans un serrage efficace grâce au ressort et le voyant indique malgré tout qu'il est nécessaire d'actionner le moyen de serrage pour remettre le ressort en position de contrainte maximale, si c'est la position désirée.

La languette peut avoir plusieurs couleurs ou des repères qui limitent des zones correspondant à des forces de serrage différentes et donc à une qualité du serrage des conducteurs différente suivant la couleur ou le repère visible ce qui implique d'intervenir ou pas sur le dispositif ou ce qui permet de serrer les conducteurs à une pression prédéterminée suivant la nature des conducteurs ou leur diamètre.

Dans une autre forme de réalisation selon les figures 1 et 2 le corps du voyant 10 n'est pas lié directement à l'écrou du système de serrage du/des conducteur(s) électrique(s). Le voyant est maintenu par un ressort secondaire 11 réservé au fonctionnement de ce voyant. Lorsque le moyen de serrage est desserré ou insuffisamment serré, le voyant est maintenu par le ressort secondaire dans une position qui indique cet état du moyen de serrage. Lorsque le moyen de serrage est en serrage optimum, le voyant, actionné mécaniquement, indique en permanence cet état de serrage optimum. On peut par exemple, choisir d'utiliser en guise de voyant une languette qui apparaît par un trou 13 du corps du dispositif et qui indique si le ressort principal est en position de contrainte maximale c'est-à-dire si la force exercée sur le(s) conducteur(s) électrique(s) est optimum.

Selon une variante non illustrée, le corps du voyant mécanique qui n'est pas lié à l'écrou 3,au lieu de déboucher par un trou dans le corps 1, est visible en partie seulement par une fenêtre pratiquée dans le corps 1 devant laquelle le corps du voyant peut se déplacer, à l'intérieur du corps 1.

Selon une autre variante non illustrée, le voyant mécanique comporte un indicateur qui peut se déplacer en rotation et/ou en translation et qui indique le niveau de la force exercée par le moyen de serrage sur le/les conducteur(s) électrique(s); l'indicateur est implanté dans une zone du dispositif facilement visible lorsque celui-ci est installé en position de fonctionnement, il est actionné:
- soit par le corps d'un voyant mécanique lié à l'écrou de la vis de serrage tel que celui décrit plus haut et portant le repère 7,
- soit par le corps d'un voyant mécanique non lié directement à l'écrou de la vis de serrage tel que celui décrit plus haut et portant le repère 10. Ce voyant mécanique est constitué d'un corps de voyant tel que 7 ou 10 qui dans ce cas sert de commande mécanique à l'indicateur qui, lui, renseigne directement sur l'état du serrage.

Selon une autre variante non illustrée, le corps du dispositif est en tout ou partie transparent ou translucide, dans le cas ou un voyant mécanique est intégré au dispositif, ce voyant est alors visible à travers le corps du dispositif et il n'est pas indispensable de pratiquer une ouverture dans ledit corps pour distinguer l'indication du voyant.

Pour que la description soit claire et imagée, des variantes de voyants sont décrites et représentées ci-dessus avec des repères liés au dispositif de connexion objet de l'invention représenté en figure 1. Cependant chacune de ces variantes de voyants peut également être implantée dans n'importe quel autre type de dispositif de connexion de conducteur(s) électrique(s) comportant au moins un moyen de serrage et au moins un ressort, de quelque forme qu'il soit, qui s'oppose au desserrage lorsque le/les conducteur(s) électrique(s) est/sont serré(s), cet ensemble formant alors un dispositif nouveau; la présente demande de brevet d'invention concerne aussi l'implantation d'un voyant mécanique, tel que décrit plus haut, associé à un connecteur électrique de ce type.

Dans le cas d'un voyant maintenu par un ressort tel que 11, ce dernier peut, par sa forme se maintenir par lui-même en place; il peut être utile de lui adjoindre un arrêtoir tel que 12.

D'autre part pour un meilleur fonctionnement du dispositif, il peut être utile de donner au corps 1 une forme particulière en 14 pour maintenir l'écrou dans son logement par un bossage par exemple, lorsqu'il n'y a pas de conducteur électrique en place dans le dispositif. Toutefois cette limitation de l'amplitude du mouvement de translation de l'écrou 3 doit laisser au moyen de serrage, formé par l'écrou 3 et la vis 2, un débattement suffisant pour que le ressort 6 puisse remplir sa fonction.

La réalisation du logement de la languette 7 ou de la languette 10 se fera de préférence par moulage. Il est préférable de réaliser le corps 1 en deux parties assemblées selon le plan de coupe de la figure 1; ce plan n'est pas obligatoirement au milieu du corps 1, il peut être déporté sur un côté, le voyant peut être aussi désaxé.

## Revendications

1. Dispositif pour connexions électriques comportant un corps (1) composé d'une ou de plusieurs parties, indépendant ou faisant partie d'un ensemble électrique, au moins un moyen de serrage par vis (2) et/ou écrou(s) (3) du/des conducteur(s) électrique(s) à connecter entre eux ou à un dispositif électrique, caractérisé par au moins un ressort (6) actionné par le mouvement de translation de l'écrou (3) prisonnier en rotation et actionné lui-même par la rotation de la vis (2), produisant une réaction croissante lorsque le moyen de serrage susdit est actionné dans le sens du serrage dudit/desdits conducteur(s) électrique(s), ce ressort (6) permettant par un débattement suffisant du moyen de serrage susdit que celui-ci rattrape automatiquement et sans être actionné en rotation, tout desserrage accidentel, non voulu dudit/desdits conducteur(s) électrique(s) tout en maintenant sur ces derniers une force suffisante pour conserver la qualité des contacts électriques de la connexion; le ressort se situe entre l'écrou du moyen de serrage et le corps du dispositif à l'opposé du/des conducteur(s) électrique(s) par rapport à l'écrou.

2. Dispositif selon la revendication 1, caractérisé par un corps essentiellement métallique pouvant être isolé électriquement.

3. Dispositif selon la revendication 1, caractérisé par un corps essentiellement en matériau isolant électrique.

4. Dispositif selon l'une quelconque des revendications précédentes, caractérisé par un voyant à fonctionnement mécanique qui indique par son aspect et/ou sa position si la force de serrage sur le/les conducteur(s) électrique(s) est optimum; le corps du voyant (7) est lié à l'écrou (3) et se déplace en translation avec ce dernier; la position du corps du voyant (7) est visible grâce à une ouverture dans le corps (1) telle que celle située en (8) devant laquelle le corps (7) peut se déplacer et/ou une ouverture telle que (9) dans le corps (1) où le corps (7) peut déboucher ou en tout autre espace du corps (1) facilement visible.

5. Dispositif selon la revendication 1 ou 2 ou 3,caractérisé par un voyant à fonctionnement mécanique qui indique par son aspect et/ou sa position si la force de serrage exercée sur le/les conducteur(s) électrique(s) est optimum; le corps du voyant (10), qui n'est pas lié à l'écrou (3), est maintenu dans une position qui indique le manque de serrage lorsqu'il y a un serrage insuffisant ou pas de serrage par un ressort secondaire (11) pouvant être lui-même maintenu en place par un arrêtoir (12); le déplacement en translation de l'écrou (3) en action de serrage actionne le corps du voyant (10) en translation, celui-ci peut alors être visible par un trou (13) dans le corps (1);

6. Dispositif selon la revendication 1 ou 2 ou 3,caractérisé par un voyant à fontionnement mécanique qui indique par son aspect et/ou sa position si la force de serrage exercée sur le/les conducteur(s) électrique(s) est optimum; le corps du voyant qui n'est pas lié à l'écrou (3) est maintenu dans une position qui indique le manque de serrage, lorsqu'il y a un serrage insuffisant ou pas de serrage, par un ressort secondaire qui peut être lui-même maintenu en place par un arrêtoir; le déplacement en translation de l'écrou (3) en action de serrage actionne le corps du voyant dont une partie est visible grâce à une fenêtre dans le corps (1) devant laquelle le corps du voyant se déplace.

7. Dispositif selon la revendication 1 ou 2 ou 3,caractérisé par un voyant mécanique comportant un indicateur qui peut se déplacer en rotation et/ou en translation et qui indique le niveau de la force exercée par le moyen de serrage sur le/les conducteur(s) électrique(s); l'indicateur disposé dans une zone du dispositif facilement visible lorsque celui ci est installé en position de fonctionnement est actionné:
- soit par le corps d'un voyant mécanique lié à l'écrou de la vis de serrage tel que celui de la revendication 4,
- soit par le corps d'un voyant mécanique non lié directement à l'écrou de la vis de serrage tel que celui de la revendication 5 ou celui de la revendication 6.

8. Dispositif selon la revendication 1 ou 2 ou 3,caractérisé par un corps (1) au moins en partie translucide ou transparent dans lequel est intégré au moins un voyant qui indique par son aspect et/ou sa position si la force de serrage exercée sur le/les conducteur(s) électrique(s) est optimum; le voyant est visible à travers le corps (1) qui ne comporte pas de trou ou de fenêtre destiné à voir ce voyant.

9. Dispositif selon l'une quelconque des revendications précédentes, caractérisé en ce qu'il comporte au moins un organe intermédiaire interposé entre le/les moyen(s) de serrage et le/les conducteur(s) électrique(s).

10. Dispositif de connexion électrique comportant au moins un moyen de serrage du/des conducteur(s) électrique(s) à connecter entre eux et/ou à un dispositif électrique, au moins un ressort dont la réaction s'oppose au desserrage dudit/desdits conducteur(s) électrique(s), caractérisé par un voyant à fonctionnement mécanique qui indique par son aspect et/ou sa position si le serrage dudit/desdits conducteur(s) électrique(s) est efficace et/ou s'il est nécessaire d'actionner le moyen de serrage pour changer la contrainte exercée sur le/les ressorts.

## Revendications modifiées

### Revendications modifiées conformément à la règle 86(2) CBE.

1. Dispositif pour connexions électriques comportant un corps (1) composé d'une ou de plusieurs parties, indépendant ou faisant partie d'un ensemble électrique, au moins un moyen de serrage par vis (2) et/ou écrou(s) (3) du/des conducteur(s) électrique(s) à connecter entre eux ou à un dispositif électrique, caractérisé par au moins un ressort (6) actionné par le mouvement de translation de l'écrou (3) prisonnier en rotation, actionné lui-même par la rotation et le déplacement de la vis (2), le ressort (6), qui n'est pas constitué par une rondelle élastique, qui se situe entre l'écrou du moyen de serrage et le corps du dispositif à l'opposé du/des conducteur(s) électrique(s) par rapport à l'écrou (3), qui produit une réaction croissante lorsque le moyen de serrage susdit est actionné dans le sens du serrage dudit/desdits conducteur(s) électrique(s), permet par un débattement suffisant du moyen de serrage susdit que celui-ci rattrape automatiquement et sans être actionné en rotation, tout desserrage accidentel, non voulu dudit/desdits conducteur(s) électrique(s) tout en maintenant sur ces derniers une force suffisante pour conserver une bonne qualité des contacts électriques de la connexion.

2. Dispositif selon la revendication 1, caractérisé par un corps essentiellement métallique pouvant être isolé électriquement.

3. Dispositif selon la revendication 1, caractérisé par un corps essentiellement en matériau isolant électrique.

4. Dispositif selon l'une quelconque des revendications précédentes, comportant de plus un voyant à fonctionnement mécanique renseignant sur l'état de serrage du/des conducteur(s) électrique(s) caractérisé en ce que le corps du voyant (7) est lié à l'écrou (3) et se déplace en translation avec ce dernier à l'intérieur du corps (1) en indiquant par son aspect et/ou sa position si la force de serrage est optimum, le corps du voyant (7) étant visible grâce à une ouverture dans le corps (1) telle que celle située en (8) devant laquelle le corps (7) peut se déplacer et/ou une ouverture telle que (9) dans le corps (1) où le corps (7) peut déboucher lorsque le serrage est suffisant, ou en tout autre espace du corps (1) facilement visible.

5. Dispositif selon la revendication 1 ou 2 ou 3 comportant de plus un voyant à fonctionnement mécanique renseignant sur l'état de serrage du/des conducteur(s) électrique(s) caractérisé en ce que le corps du voyant (10), qui n'est pas lié à l'écrou (3), qui est maintenu dans une position indiquant le manque de serrage lorsqu'il y a serrage insuffisant ou pas de serrage par un ressort secondaire (11) pouvant être lui-même maintenu en place par un arrêtoir (12), qui est actionné en translation par le déplacement de l'écrou (3) lorsque le moyen de serrage du dispositif est lui-même actionné dans le sens du serrage du/des conducteur(s) électrique(s) jusqu'au déplacement suffisant de l'écrou (3), est visible par un trou tel que (13) dans le corps (1).

6. Dispositif selon la revendication 1 ou 2 ou 3 comportant de plus un voyant à fonctionnement mécanique renseignant sur l'état de serrage du/des conducteur(s) électrique(s) caractérisé en ce que le corps du voyant, qui n'est pas lié à l'écrou (3), qui est maintenu dans une position indiquant le manque de serrage lorsqu'il y a un serrage insuffisant ou pas de serrage par un ressort secondaire pouvant être lui-même maintenu en place par un arrêtoir, qui est actionné en translation par le déplacement de l'écrou (3) lorsque le moyen de serrage du dispositif est actionné dans le sens du serrage du/des conducteur(s) électrique(s) jusqu'au déplacement suffisant de l'écrou (3), est visible par une fenêtre dans le corps (1) devant laquelle le corps du voyant peut se déplacer à l'intérieur du corps (1).

7. Dispositif selon la revendication 1 ou 2 ou 3 comportant de plus un voyant à fonctionnement mécanique renseignant sur l'état de serrage du/des conducteur(s) électrique(s) caractérisé par un indicateur de serrage qui peut se déplacer en rotation et/ou en translation, qui est disposé dans une zone du dispositif facilement visible lorsque celui-ci est installé en position de fonctionnement, et qui est actionné:
- soit par le corps d'un voyant mécanique lié en translation à l'écrou du moyen de serrage,
- soit par le corps d'un voyant mécanique actionné par l'écrou du moyen de serrage mais non lié directement à cet écrou.

8. Dispositif selon la revendication 1 ou 2 ou 3 ou 7, caractérisé par un corps au moins en partie tranlucide ou tranparent dans lequel est intégré au moins un voyant qui renseigne par un aspect et/ou sa position sur l'état de la force de serrage exercée sur le/les conducteur(s) électrique(s), le voyant étant visible à travers le corps (1) qui ne comporte pas de trou ou de fenêtre destiné à voir ce voyant.

9. Dispositif selon l'une quelconque des revendications précédentes, caractérisé en ce qu'il comporte au moins un organe intermédiaire interposé entre le/les moyen(s) de serrage et le/les conducteur(s) électrique(s).

10. Dispositif de connexion électrique comportant au moins un moyen de serrage du/des conducteur(s) électrique(s) à connecter entre eux et/ou à un dispositif électrique, au moins un ressort dont la réaction s'oppose au desserrage dudit/desdits conducteur(s) électrique(s), un voyant mécanique qui indique l'état du serrage dudit/desdits conducteur(s) électrique(s), caractérisé par le fait que le voyant comporte sur son corps, sauf à son extrémité visible, un/des repère(s) de couleur(s) et/ou de forme(s) qui délimite(nt) des zones correspondant à des forces de serrage différentes et donc à une qualité de serrage du/des conducteur(s) électrique(s) différente suivant l'indication du/des repère(s).
